# EUROPEAN PATENT SPECIFICATION

(11) **EP 1 419 841 B1**
(45) Date of publication and mention of the grant of the patent: **20.12.2006**
(21) Application number: 03257132.5
(22) Date of filing: 12.11.2003
(51) Int. Cl.: B23D 49/16, B23D 51/20

(54) **Reciprocating saw**
Sägemaschine mit hin- und hergehendem Sägeblatt
Scie alternative

(30) Priority: 18.11.2002 CN 02258628
(43) Date of publication of application: 19.05.2004
(73) Proprietor: Positec Power Tools (Suzhou) Co., Ltd., Suzhou 215006 (CN)
(72) Inventor: Haiqing, Wang, Suzhou City 215021 (CN)
(74) Representative: Stuttard, Garry Philip

(56) References cited:
- EP-A- 1 188 505
- US-A- 2 917 088
- US-A- 3 890 708
- US-A- 4 545 123
- US-A- 5 170 564
- US-A- 5 392 519

## Description

The present invention relates to a reciprocating saw according to the preamble of claim 1.

EP1188505 discloses such a reciprocating saw.

Another known reciprocating saw comprises a housing, a plunger in the housing for mounting a saw blade, a driving gear connected to a driving mechanism, a first eccentric shaft and a second eccentric shaft disposed on the driving gear, a link member whose rear end portion connects to the first eccentric shaft, a pushing member whose rear end portion rotatably connects to the second eccentric shaft and a lifting member pivotally connected to the housing. A front end portion of the link member is rotatably connected to a rear end portion of the plunger so that the first eccentric shaft drives the link member to move reciprocally so that the plunger is able to drive a saw blade fore and aft when the driving gear rotates. For energy saving purposes, the saw blade is desirably in a downwardly depressed state relative to the workpiece when the saw blade moves in a direction against the teeth and the saw blade is desirably in a slightly upwardly lifted state relative to the workpiece when the saw blade moves in the opposite direction. For obtaining such a desirable state, a blade orbital lifting device is supplied. An actuating member for the blade lifting device in the conventional design actuates the blade lifting device by pulling. In this type of structure, the direction of movement of the actuating member is consistent with the direction of movement of the plunger so that acute vibrations occur during use.

The present invention seeks to provide a low vibration reciprocating saw, which is achieved by the combination of features of claim 1, i.e.:
a reciprocating saw comprising:
   a housing;
   a plunger in the housing for exteriorly mounting a saw blade;
   a driving gear connected to a driving mechanism;
   a first eccentric shaft and a second eccentric shaft disposed on the driving gear;
   a link member a rear end portion of which is connected to the first eccentric shaft and a front end portion of which is pivotally connected to a rear end portion of the plunger;
   a pushing member a rear end portion of which is rotatably connected to the second eccentric shaft;
   a lifting member pivotally connected to the housing,
   whereby the lifting member contacts a front end portion of the pushing member and a sleeve bearing disposed on a rear end portion of the plunger, and whereby an angle formed between lines through a central axis of the first eccentric shaft, a central axis of the driving gear and a central axis of the second eccentric shaft is obtuse, whereby the lines lie in a plane which is perpendicular to the first eccentric shaft.

The angle between lines through the centre of a first eccentric shaft, a rotating center of the driving gear and a rotating center of the second eccentric shaft is obtuse so that the pushing member moves backwards when the link member moves forward so as to eliminate vibrations which result from the reciprocative movement of the plunger.

Dependent claims 2-4 disclose preferred embodiments of the invention.

Preferably a front end portion of the pushing member bears against a lower rear portion of the lifting member and an upper front end portion of the lifting member bears against the sleeve bearing.

Preferably the reciprocating saw further comprises a spring between the housing and the sleeve bearing. The spring serves to bias the lifting member against the pushing member. When the lifting member lifts the sleeve bearing upward to bring a rear end portion of the plunger upward, the spring is depressed. In the return action of the saw, the restoring force of the depressed spring assists the rear end of the plunger downward.

Preferably the first eccentric shaft and the second eccentric shaft are respectively provided on the top surface and the bottom surface of the driving gear.

The accompanying drawings which are incorporated in and constitute a part of this specification illustrate an embodiment of the present invention and together with the description serve to explain the principles of the present invention in a non-limitative sense.
FIG. 1 shows a mainly sectional view of an embodiment of the invention;
FIG. 2 shows a sectional view along line A-A of FIG. 1;
FIG. 3 shows a sectional view along line B-B of FIG. 1;

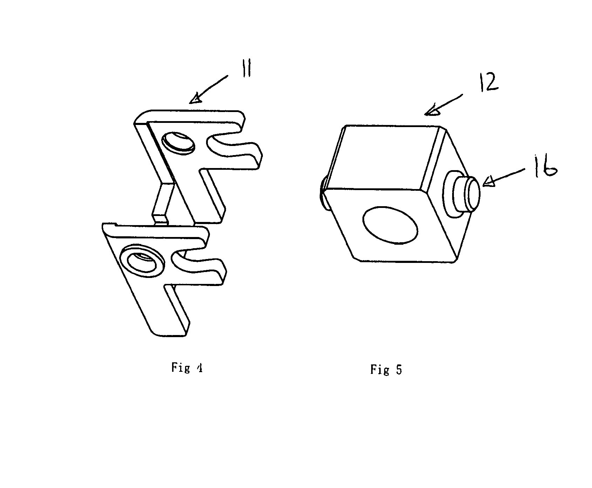

FIG. 4 shows a perspective view of the lifting member of Figure 1; and
FIG. 5 shows a perspective view of the sleeve bearing of Figure 1.

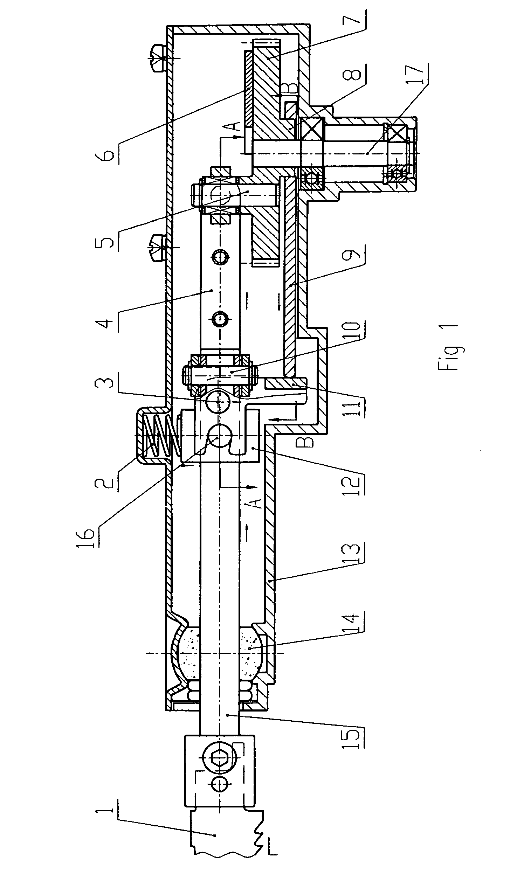

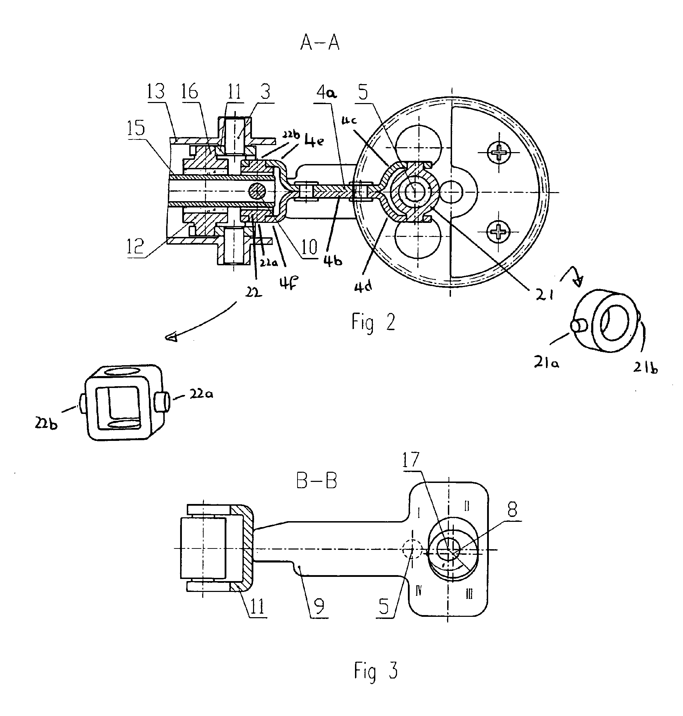

In Figures 1 and 2, a reciprocating saw comprises a housing [13] within which is a plunger [15] for exteriorly mounting a saw blade [1]. A driving gear [7] is connected to a driving mechanism and a first eccentric shaft [5] and a second eccentric shaft [8] are disposed respectively on the top surface and the bottom surface of the driving gear [7]. A link member [4] comprises twin plates [4a, 4b] fastened together and diverging at their rear end into twin arms [4c, 4d] and at their front end into twin arms [4e, 4f]. The ends of the twin arms [4c, 4d] include an aperture which pivotally engages with pins [21a, 21b] on the outer face of a coupling [21] mounted on a bearing on the first eccentric shaft [5]. The ends of the twin arms [4e, 4f] include an aperture which pivotally engages with pins [22a, 22b] on the outer face of a coupling [22]. The coupling itself is pivotally mounted on a vertical pin [10]. The vertical pin [10] extends through and beyond the walls of the plunger [15] where it is riveted at its ends to the coupling [22]. A rear end portion of a pushing member [9] is rotatably connected to the second eccentric shaft [8].

A lifting member [11] is pivotally connected to the housing [13] via a horizontal pivot [3]. A lower rear end portion of the lifting member [11] contacts a front end portion of the pushing member [9] and an upper front end portion of the lifting member [11] bears against a radial connecting pin [16] on a sleeve bearing [12] which is disposed on the rear end portion of the plunger [15]. A spring [2] is mounted between the housing [13] and the sleeve bearing [12] and generally serves to bias the lifting member [11] against the pushing member [9].

When pushed forward by the rotation of the driving gear [7], the front end portion of the pushing member [9] pushes the lifting member [11] causing it to rotate about the pivot [3] in the clockwise direction so that the lifting member [11] lifts the sleeve bearing [12] upward to bring a rear end portion of the plunger [15] upward. At the same time the spring [2] is depressed. The upward movement of the rear end portion of the plunger [15] causes the plunger [15] to swing about a ball bearing [14] so that the saw blade [1] synchronously moves down. The downward movement assists the forward cutting action of the saw blade [1].

During the return action of the saw blade [1], the lifting member [11] rotates about the pivot [3] in the anticlockwise direction. The rear end portion of the plunger [15] moves down so that the plunger [15] swings about the ball bearing [14] in the clockwise direction assisted by the restoring force of the depressed spring [2]. The saw blade [1] lifts upwardly away from the workpiece thereby reducing the friction between the saw blade [1] and the workpiece to save energy. A small counterweight [6] seated on the upper part of the driving gear [7] serves to reduce further vibrations resulting from the reciprocative action of the plunger [15].

As illustrated in Fig 3, an angle formed between lines through the central axis of the first eccentric shaft [5], the central axis of the driving gear [7] and the central axis of the second eccentric shaft [8] is obtuse. The lines lie in a plane which is perpendicular to the first eccentric shaft [5]. In other words, if the plane is divided into four quadrants (I, II, III and IV) by the central axis of the driving gear shaft [17], the central axis of the first eccentric shaft [5] and the central axis of the second eccentric shaft [8] do not lie in the same quadrant.

## Claims

1. A reciprocating saw comprising:
a housing [13],
a plunger [15] in the housing [13] for exteriorly mounting a saw blade [1],
a driving gear [7] connected to a driving mechanism,
a first eccentric shaft [5] and a second eccentric shaft [8] disposed on the driving gear [7],
a link member [4] a rear end portion of which is connected to the first eccentric shaft [5] and a front end portion of which is pivotally connected to a rear end portion of the plunger [15],
a pushing member [9] a rear end portion of which is rotatably connected to the second eccentric shaft [8],
a lifting member [11] pivotally connected to the housing [13],
whereby the lifting member [11] contacts a front end portion of the pushing member [9], and whereby an angle formed between lines through a central axis of the first eccentric shaft [5], a central axis of the driving gear [7] and a central axis of the second eccentric shaft [8] is obtuse, whereby the lines lie in a plane which is perpendicular to the first eccentric shaft [5], **characterised in that** the lifting member [11] further contacts a sleeve bearing [12] disposed on a rear end portion of the plunger [15].

2. A reciprocating saw as claimed in claim 1, wherein a front end portion of the pushing member [9] bears against a lower rear end portion of the lifting member [11] and an upper front end portion of the lifting member [11] bears against the sleeve bearing [12].

3. A reciprocating saw as claimed in claim 1 or 2 further comprising: a spring [2] between the housing [13] and the sleeve bearing [12] for biasing the lifting member [11] against the pushing member [9].

4. A reciprocating saw as claimed in any preceding claim wherein the first eccentric shaft [5] and the second eccentric shaft [8] are respectively provided on the top surface and the bottom surface of the driving gear [7].

## Patentansprüche

1. Eine sich hin und her bewegende Säge umfassend:
ein Gehäuse (13),
einen Kolben (15) in dem Gehäuse (13), um außerhalb ein Sägeblatt (1) anzubringen,
ein mit einem Antriebsmechanismus verbundenes Antriebsrad (7),
eine erste exzentrische Achse (5) und eine zweite exzentrische Achse (8), welche auf dem Antriebsrad (7) angeordnet sind,
ein Verbindungselement (5), von welchem ein hinterer Endabschnitt mit der ersten exzentrischen Achse (5) verbunden ist und von welchem ein vorderer Endabschnitt schwenkbar mit einem hinteren Endabschnitt des Kolbens (15) verbunden ist,
ein Schubelement (9), von welchem ein hinterer Endabschnitt drehbar mit der zweiten exzentrischen Achse (8) verbunden ist,
ein schwenkbar mit dem Gehäuse (13) verbundenes Anhebungselement (11), wobei das Anhebungselement (11) einen vorderen Endabschnitt des Druckelements (9) berührt, und wobei ein zwischen Linien durch eine Mittelachse der ersten exzentrischen Achse (5), eine Mittelachse des Antriebsrads (7) und eine Mittelachse der zweiten exzentrischen Achse (8) gebildeter Winkel stumpf ist, wobei die Linien in einer Ebene liegen, welche senkrecht zu der ersten exzentrischen Achse (5) steht, **dadurch gekennzeichnet, dass** das Anhebungselement (11) weiterhin ein an einem hinteren Endabschnitt des Kolbens (15) angeordnetes Hülsenlager (12) berührt.

2. Eine sich hin und her bewegende Säge gemäß Anspruch 1, wobei ein vorderer Endabschnitt des Schubelements (9) gegen einen unteren hinteren Endabschnitt des Anhebungselements (11) drückt, und ein oberer vorderer Endabschnitt des Anhebungselements (11) gegen das Hülsenlager (12) drückt.

3. Eine sich hin und her bewegende Säge gemäß Anspruch 1 oder 2, weiterhin umfassend:
eine Feder (2) zwischen dem Gehäuse (13) und dem Hülsenlager (12), um das Anhebungselement (11) gegen das Schubelement (9) vorzuspannen.

4. Eine sich hin und her bewegende Säge gemäß einem der vorhergehenden Ansprüche, wobei die erste exzentrische Achse (5) und die zweite exzentrische Achse (8) auf der oberen Oberfläche bzw. der unteren Oberfläche des Antriebsrads (7) vorgesehen sind.

## Revendications

1. Scie alternative comprenant :
un boîtier (13) ;
un piston plongeur (15) dans le boîtier (13) pour monter à 'extérieur une lame de scie (1) ;
un engrenage d'entraînement (7) raccordé à un mécanisme d'entraînement ;
un premier arbre excentrique (5) et un second arbre excentrique (8) disposés sur l'engrenage d'entraînement (7) ;
un élément de liaison (4) dont une partie d'extrémité arrière est raccordée au premier arbre excentrique (5) et dont une partie d'extrémité avant est raccordée de manière pivotante à une partie d'extrémité arrière du piston plongeur (15) ;
un élément de poussée (9) dont la partie d'extrémité arrière est raccordée de manière rotative au second arbre excentrique (8) ;
un élément de levage (11) raccordé de manière pivotante au boîtier (13),
selon lequel l'élément de levage (11) est en contact avec une partie d'extrémité avant de l'élément de poussée (9), et selon lequel un angle formé entre les lignes passant par un axe central du premier arbre excentrique (5), un axe central de l'engrenage d'entraînement (7) et un axe central du second arbre excentrique (8) est obtus, moyennant quoi les lignes se trouvent dans un plan qui est perpendiculaire au premier arbre excentrique (5), **caractérisée en ce que** l'élément de levage (11) est en outre en contact avec un palier de manchon (12) disposé sur une partie d'extrémité arrière du piston plongeur (15).

2. Scie alternative selon la revendication 1 , dans laquelle une partie d'extrémité avant de l'élément de poussée (9) s'appuie contre une partie d'extrémité arrière inférieure de l'élément de levage (11) et une partie d'extrémité avant supérieure de l'élément de levage (11) s'appuie contre le palier de manchon (12).

3. Scie alternative selon la revendication 1 ou 2, comprenant en outre : un ressort (2) entre le boîtier (13) et le palier de manchon (12) pour Solliciter l'élément de levage (11) contre l'élément de poussée (9).

4. Scie alternative selon l'une quelconque des revendications précédentes, dans laquelle le premier arbre excentrique (5) et le second arbre excentrique (8) sont prévus respectivement sur la surface supérieure et la surface inférieure de l'engrenage d'entraînement (7).
